# EUROPÄISCHE PATENTSCHRIFT

(11) **EP 2 238 029 B1**
(45) Veröffentlichungstag und Bekanntmachung des Hinweises auf die Patenterteilung: **15.06.2011**
(21) Anmeldenummer: 09705622.0
(22) Anmeldetag: 29.01.2009
(51) Int. Cl.: B64D 11/00

(54) **VERFAHREN UND SYSTEM ZUR SPANNUNGSVERSORGUNG VON FLUGZEUGKABINENMODULEN**
METHOD AND SYSTEM FOR THE VOLTAGE SUPPLY OF AIRCRAFT CABIN MODULES
PROCÉDÉ ET SYSTÈME POUR ALIMENTER DES MODULES DE CABINES D'AVION EN TENSION

(30) Priorität: 31.01.2008 DE 102008007023; 31.01.2008 US 63387
(43) Veröffentlichungstag der Anmeldung: 13.10.2010
(73) Patentinhaber: Airbus Operations GmbH, 21129 Hamburg (DE)
(72) Erfinder: RIEDEL, Christian, 21640 Bliedersdorf (DE); BERKHAHN, Sven-Olaf, 21220 Ohlendorf (DE); BAUER, Hans-Achim, 21037 Hamburg (DE)
(74) Vertreter: Charles, Glyndwr
(86) Internationale Anmeldenummer: PCT/EP2009/051001
(87) Internationale Veröffentlichungsnummer: WO 2009/095439

(56) Entgegenhaltungen:
- DE-A1-102005 024 933
- US-B1- 6 218 930
- LEHR AMIR: "Power over LAN" MESSTECHNIK GRUNDLAGEN, Nr. 21, 2002, Seiten 57-58, XP002542619 Funkschau
- B&B ELECTRONICS: "Power over Ethernet (PoE)" B&B ELECTRONICS MANUFACTURING COMPANY, September 2005 (2005-09), Seiten 1-3, XP002542620 Dayton Road 707, Ottawa USA

## Beschreibung

Die Erfindung betrifft ein Verfahren und System zur Spannungsversorgung von Flugzeugkabinenmodulen, insbesondere von sicherheitsrelevanten Modulen in einer Flugzeugkabine durch eine kombinierte Übertragung von Daten und einer Versorgungsspannung beziehungsweise eines Versorgungsstromes.

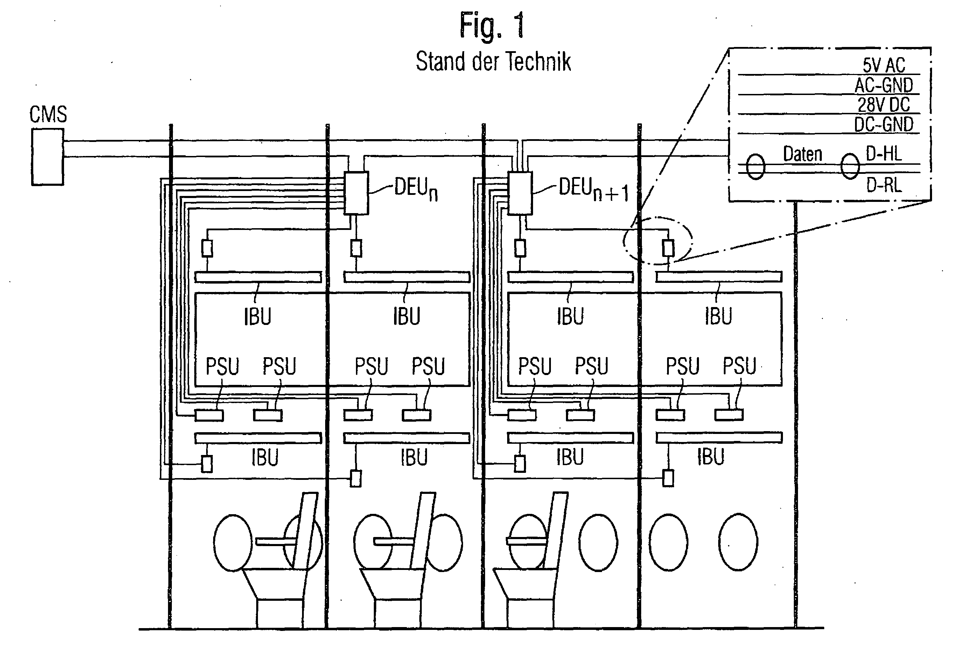

Fig. 1 zeigt ein herkömmliches System zur Spannungsversorgung von Flugzeugkabinenmodulen.

Ein Kabinenserver (CMS: Cabin Management Server) ist über zwei Leitungen seriell mit mehreren Decodier-/Codier-Einheiten (DEU), innerhalb einer Flugzeugkabine eines Flugzeuges verbunden. An jede Decodier-/Codier-Einheit DEU sind mehrere Flugzeugkabinenmodule angeschlossen. Bei den Flugzeugkabinenmodulen kann es sich beispielsweise um eine Passagierversorgungseinheit (PSU: Passenger Supply Unit) oder um eine Kabinenbeleuchtungseinheit (IBU: Illumination Ballast Unit) handeln. Wie man aus Fig. 1 erkennen kann, sind an jede Decodier-/Codier-Einheit DEU vier Passagierversorgungseinheiten PSU und vier Kabinenbeleuchtungseinheiten IBU angeschlossen. Der Anschluss der Flugzeugkabinenmodule erfolgt über Kabel und Steckverbindungen.

Jedes Kabel enthält dabei sechs getrennte Leitungen, nämlich zwei Datenleitungen zur Übertragung von Daten, eine Spannungsversorgungsleitung zur Übertragung einer Wechselspannung, eine Masseleitung für die Wechselspannung, eine Gleichspannungsversorgungsleitung und eine Gleichspannungsversorgungsmasseleitung. Während die Datenleitungen mit der Decodier-/Codier-Einheit des CIDS-Datenbusses (CIDS: Cabin Intercommunication Data System) verbunden sind, werden die Spannungsversorgungsleitungen an ein Stromversorgungsnetzwerk des Flugzeugs angeschlossen.

Wie man aus Fig. 1 erkennen kann, erfolgt die Verkabelung der Datenleitungen und der Spannungsversorgungsleitungen bei dem herkömmlichen System getrennt, wobei auch unterschiedliche Anschluss-Stecker für die Datenleitungen und die Spannungsversorgungsleitungen verwendet werden. Das in Fig. 1 dargestellte herkömmliche System hat den Nachteil, dass aufgrund der Vielzahl von verlegten Daten- und Spannungsversorgungsleitungen die Verkabelung insbesondere bei großen Passagierflugzeugen sehr aufwendig ist. Nicht nur die hohe Anzahl der verschiedenen Leitungen sondern auch die unterschiedlichen Steckverbinder für die Daten- und Spannungsversorgungsleitungen erschweren die Montage.

Ein weiteres Beispiel ist in Dokument DE 102005024933 zu finden.

Aufgrund der hohen Anzahl von verlegten Leitungen erhöht sich insbesondere bei großen Passagierflugzeugen das Gewicht erheblich. Dies wiederum führt zu einem erhöhten Treibstoffverbrauch im laufenden Betrieb des Flugzeugs.

Es ist daher eine Aufgabe der vorliegenden Erfindung, Flugzeugkabinenmodule zu schaffen, die mit einem minimalen Aufwand miteinander verkabelt werden können.

Die Erfindung schafft ein Flugzeugkabinenmodul mit einem Anschluss-Stecker zum Anschluss eines Kabels, das mindestens eine elektrische Datenleitung aufweist, wobei das Flugzeugkabinenmodul eine Trennschaltung enthält, die die Daten von der aufgeprägten Offset-Gleichspannung trennt, wobei die aufgeprägte Offset-Gleichspannung und das Datensignal von dem Flugzeugkabinenmodul über die elektrische Datenleitung empfangen werden.

Im Weiteren werden bevorzugte Ausführungsformen der erfindungsgemäßen Vorrichtung und des erfindungsgemäßen Verfahrens unter Bezugnahme auf die beigefügten Figuren zur Erläuterung erfindungswesentlicher Merkmale beschrieben.

Es zeigen:
- Fig. 1: ein herkömmliches System zur Verkabelung von Flug- zeugkabinenmodulen;
- Fig. 2: ein Blockschaltbild einer möglichen Ausführungsform des erfindungsgemäßen Flugzeugkabinenmoduls;
- Fig. 3: ein Ausführungsbeispiel eines Systems zur Verkabe- lung von Flugzeugkabinenmodulen gemäß der Erfin- dung;
- Fig. 4: ein Signaldiagramm zur Erläuterung eines Ausfüh- rungsbeispiels des erfindungsgemäßen Verfahrens zur Spannungsversorgung eines Flugzeugkabinenmoduls; und
- Fig. 5: ein Ausführungsbeispiel für eine in einem erfin- dungsgemäßen Flugzeugkabinenmodul enthaltene Trenn- schaltung.

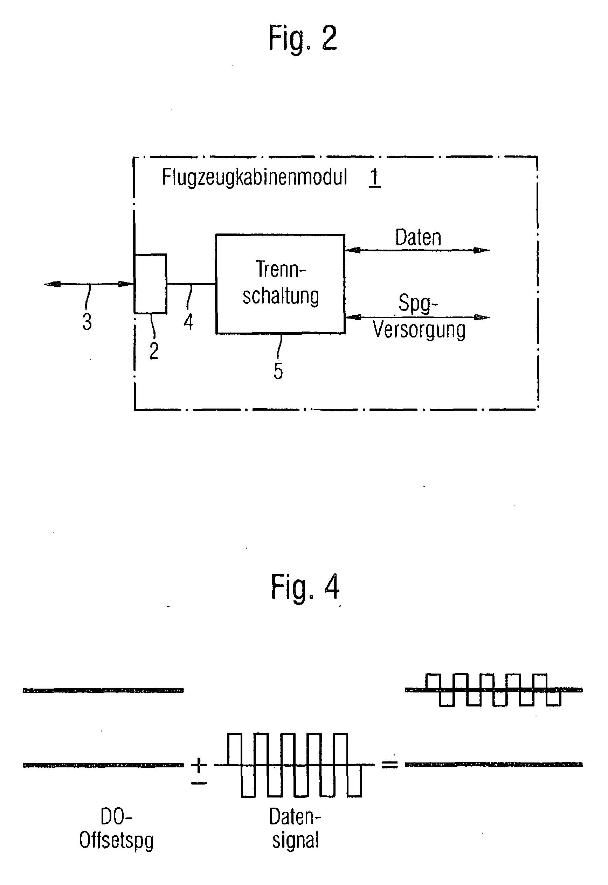

Wie man aus Fig. 2 erkennen kann, weist bei dem dargestellten Ausführungsbeispiel ein Flugzeugkabinenmodul 1 einen Anschluss-Stecker 2 auf, der zum Anschluss eines Kabels 3 vorgesehen ist. Das Kabel 3 enthält mindestens eine elektrische Datenleitung. Über diese Datenleitung wird eine Versorgungsspannung (Offset-Gleichspannung) und ein Datensignal übertragen. Der Anschluss-Stecker 2 ist über eine interne Leitung mit einer in dem Flugzeugkabinenmodul 1 integrierten Trennschaltung 5 verbunden. Die Trennschaltung 5 trennt das empfangene Datensignal von der darauf aufgeprägten Versorgungsspannung. Die getrennte Versorgungsspannung dient zur Spannungs- beziehungsweise Stromversorgung weiterer Komponenten innerhalb des Flugzeugkabinenmoduls 1. Über die in dem Kabel 3 enthaltene Datenleitung werden die Versorgungsspannung und das Datensignal gemeinsam übertragen. Dabei wird das Datensignal der Versorgungsspannung, z.B. einer Offset-Gleichspannung, bei einer möglichen Ausführungsform additiv überlagert. Das Kabel 3 enthält bei einer möglichen Ausführungsform eine elektrische Datenhinleitung und eine elektrische Datenrückleitung. Die beiden Datenleitungen können bei einer möglichen Ausführungsform zur elektromagnetischen Abschirmung mit einem Kabelmantel umhüllt sein.

Bei dem in Fig. 2 dargestellten Flugzeugkabinenmodul kann es sich beispielsweise um eine Passagierversorgungseinheit PSU (Passenger Supply Unit), eine Kabinenbeleuchtungseinheit IBU (Illumination Ballast Unit) oder komplexe Einheiten wie FAP (Flight Attendant Panel), CVMS (Cabin Vidio Monitoring System), PID (Passenger Information Display), Infosigns, Rauch-Detektoren usw. handeln. Das Flugzeugkabinenmodul 1, wie es in Fig. 2 dargestellt ist, kann einen weiteren Anschluss-Stecker aufweisen und ist mit weiteren Flugzeugkabinenmodulen 1 seriell zu einer Flugzeugkabinenmodulkette verkettbar (Daisy Chain). Bei einer möglichen Ausführungsform des Flugzeugkabinenmoduls 1 gemäß Fig. 2 werden die durch die Trennschaltung 5 von der Versorgungsspannung getrennten Daten einer Datenverarbeitungseinheit innerhalb des Flugzeugkabinenmoduls 1 zugeführt. Bei der abgetrennten Versorgungsspannung handelt es sich um eine Versorgungsgleichspannung.

Bei einer möglichen Ausführungsform wird eine Offset-Gleichspannung DC über eine Datenleitung des Kabels 3 übertragen, wobei der Offset-Gleichspannung DC ein Datensignal additiv überlagert wird.

Bei einer möglichen Ausführungsform ist das in Fig. 2 dargestellte Flugzeugkabinenmodul 1 über eine Schnittstelle konfigurierbar. Bei dieser Konfiguration kann die Amplitude der zusätzlich über die Datenleitung übertragenen Versorgungsspannung konfiguriert werden.

Beispielsweise wird das Flugzeugkabinenmodul 1 dahingehend konfiguriert, dass die Versorgungsspannung eine DC-Gleichspannung mit einer Amplitude von 28 Volt ist.

In einem weiteren Konfigurationsbeispiel wird das Flugzeugkabinenmodul 1 dahingehen konfiguriert, dass die Versorgungsspannung eine Gleichspannung DC ist.

Bei einer möglichen Ausführungsform kann die Konfiguration des Flugzeugkabinenmoduls 1 bezüglich der Versorgungsspannung manuell erfolgen, beispielsweise durch Einbau einer entsprechend dimensionierten Trennschaltung 5 in das Flugzeugkabinenmodul 1.

In einer alternativen Ausführungsform erfolgt die Konfiguration der Trennschaltung 5 bezüglich der Versorgungsspannung getrennt durch Übertragung entsprechender Konfigurationsdaten über das Kabel 3.

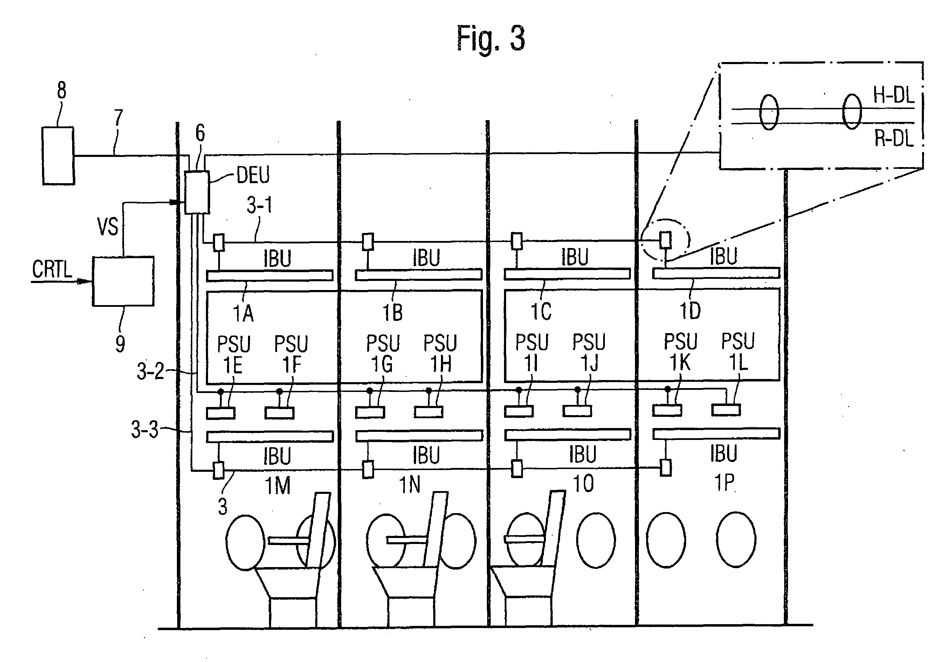

Fig. 3 zeigt ein Ausführungsbeispiel eines Systems zur Verkabelung und Spannungsversorgung von Flugzeugkabinenmodulen 1 gemäß der Erfindung.

Eine Decodier-/Codier-Einheit 6 ist über einen Bus 7 mit einem Flugzeugkabinenserver 8 verbunden. An der Decodier-/Codier-Einheit 6 wird eine Versorgungsspannung VS, die von einer Einheit 9 stammt, eingespeist. An der Decodier-/Codier-Einheit 6 sind bei dem in Fig. 3 dargestellten Ausführungsbeispiel 16 Flugzeugkabinenmodule 1 über drei verschiedene Kabel 3-1, 3-2, 3-3 angeschlossen. Über ein erstes Kabel 3-1 sind vier obere Kabinenbeleuchtungseinheiten 1A, 1B, 1C, 1D angeschlossen. Über ein zweites Kabel 3-2 sind acht Passagierversorgungseinheiten (PSU) 1E-1L an die Decodier-/Codier-Einheit 6 angeschlossen. Über ein drittes Kabel 3-3 sind ferner vier untere Kabinenbeleuchtungseinheiten (IBU) 1M, 1N, 1O, 1P mit der Decodier-/Codier-Einheit 6 verbunden. Bei dem in Fig. 3 dargestellten Ausführungsbeispiel weist jedes der drei Kabel 3-1, 3-2, 3-3 eine elektrische Datenhinleitung HDL und eine elektrische Datenrückleitung RDL auf. Die Flugzeugkabinenmodule 1 jeder Gruppe sind über das jeweilige Kabel 3 mit weiteren Flugzeugkabinenmodulen 1 seriell zu einer Flugzeugkabinenmodulkette verkettet (daisy chain). Über die elektrischen Datenleitungen des Kabels 3 wird die an der Decodier-/Codier-Einheit 6 eingespeiste Versorgungsspannung VS zusammen mit dem Datensignal auf einer Leitung zu den seriell verketteten Flugzeugkabinenmodulen 1 übertragen (Power over Data). Vergleich man das in Fig. 3 dargestellte System mit dem in Fig. 1 dargestellten herkömmlichen System, erkennt man, dass die Anzahl der verlegten Leitungen für die 16 verkabelten Flugzeugkabinenmodule 1 bei dem erfindungsgemäßen System gemäß Fig. 3 erheblich reduziert ist. Dies vereinfacht einerseits die Montage der Flugzeugkabinenmodule 1 erheblich und mindert andererseits das Gewicht des Flugzeugs, so das Treibstoff während des laufenden Betriebs des Flugzeugs eingespart wird.

Bei einer möglichen Ausführungsform ist die eingespeiste Versorgungsspannung VS zwischen verschiedenen Spannungspegeln umschaltbar. Bei einer möglichen Ausführungsform handelt es sich bei der eingespeisten Versorgungsspannung VS um eine Offset-Gleichspannung, die zwischen drei verschiedenen Spannungspegeln, nämlich einem Normal-Gleichspannungspegel, einem Notfall-Gleichspannungspegel, einem Hoch-Gleichspannungspegel, umschaltbar ist. Die Umschaltung kann in Abhängigkeit von einem an die Einheit 9 angelegten Steuersignal CRTL erfolgen

Bei einer möglichen Ausführungsform werden die in Fig. 3 dargestellten Kabel 3 in einem Versorgungskanal des Flugzeugs verlegt. Bei dem erfindungsgemäßen System, wie es in Fig. 3 dargestellt ist, wird die Anzahl der verlegten Leitungen durch die Verwendung von Subnetzwerken reduziert, die jeweils aus einer Kette von Flugzeugkabinenmodulen 1 besteht. Fig. 4 zeigt ein Signaldiagramm zur Erläuterung eines möglichen Ausführungsbeispiels des erfindungsgemäßen Verfahrens zur Spannungsversorgung von Flugzeugkabinenmodulen 1.

Bei dem in Fig. 4 dargestellten Ausführungsbeispiel wird ein digitales Datensignal einer DC-Offset-Versorgungsspannung durch additive Überlagerung aufgeprägt. Das Signal, welches über die Datenleitungen des Kabels übertragen wird, ist als Summensignal dargestellt. In dem dargestellten Beispiel ist das Datensignal eine Folge von alternierenden Datenwerten +1, -1. Über die Datenleitung kann allerdings jedes beliebige Datensignal übertragen werden. Zudem ist die Offset-Gleichspannung bei einer möglichen Ausführungsform zwischen verschiedenen Amplitudenwerten umschaltbar.

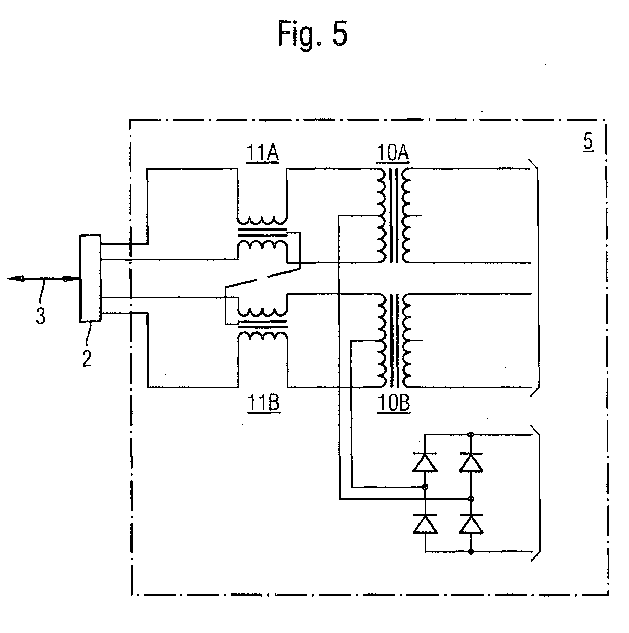

Fig. 5 zeigt ein Ausführungsbeispiel für eine in einem erfindungsgemäßen Flugzeugkabinenmodul 1 enthaltene Trennschaltung 5. Die Trennschaltung 5 enthält in dem in Fig. 5 dargestellten Ausführungsbeispiel zwei Trenntrafos 10A, 10B, die jeweils eine Primärspule und eine Sekundärspule aufweisen. Die Primärspulen der beiden Trenntrafos 10A, 10B sind jeweils über eine Drossel 11A, 11B mit dem Anschluss-Stecker 2 verbunden. Die Drosseln 11A, 11B dienen zur Entstörung des Signals. Die Sekundärspulen der beiden Trenntrafos 10A, 10B können mit einer Datenverarbeitungseinheit zur Verarbeitung des übertragenen Datensignals verbunden, welchen beispielsweise mit einer Ethernet-PHY. An einer Mittenanzapfung der Primärspulen der Trenntrafos 10A, 10B wird die über das Kabel 3 übertragene Versorgungsgleichspannung zur Spannungsversorgung des Flugzeugkabinenmoduls 1 ausgekoppelt. Die beiden Mittenanzapfungen der Primärspulen sind, wie in Fig. 5 dargestellt mit einer aus vier Dioden aufgebauten Brückengleichrichterschaltung verbunden. Die Brückengleichrichterschaltung liefert beispielsweise eine Versorgungsgleichspannung zur Spannungsversorgung des Flugzeugkabinenmoduls in Höhe von 24 Volt DC oder 48 Volt DC. Der Anschluss-Stecker 2 eignet sich beispielsweise zum Anschluss eines 100 MB Ethernet-Kabels mit zwei Hin- und zwei Rückleitungen.

Bei einer möglichen Ausführungsform ist das Flugzeugkabinenmodul 1 im laufenden Betrieb mittels des Anschluss-Steckers 2 ein- oder aussteckbar, das heißt hot-plug-fähig. Dies ist möglich aufgrund der Spulen, welche Spannungsspitzen dämpfen, wenn das Flugzeugkabinenmodul 1 ein- oder ausgesteckt wird.

Mit dem erfindungsgemäßen Verkabelungssystem zur Spannungsversorgung von Flugzeugkabinenmodulen 1 ist es möglich, eine hohe Leistung in der Höhe von einigen hundert Watt an Flugzeugkabinenmodule 1 mit einem hohen Stromverbrauch zu übertragen, beispielsweise an LED-Streifen zur Kabinenbeleuchtung oder an Leselampen. Die Kabel 3, die über eine elektrische Datenhinleitung und eine elektrische Datenrückleitung verfügen, weisen oft bereits einen Mantel zur elektromagnetischen Abschirmung auf. Daher eignet sich das erfindungsgemäße System besonders für Flugzeuge, deren Rumpf aus Kohlefasern aufgebaut ist, da hier der Schutz gegen Blitzeinschlag eine besondere Rolle spielt. Durch die Verwendung von Kabeln 3, die bereits über eine elektromagnetische Abschirmung verfügen, ist es möglich, Daten zuverlässig auch bei einem möglichen Blitzeinschlag innerhalb des Flugzeugs zwischen den Flugzeugkabinenmodulen 1 zu übertragen. Die Übertragung der Spannungsversorgung ist unabhängig von dem eingesetzten Datenbustyp. Die Flugzeugkabinenmodule 1 werden seriell innerhalb einer sogenannten Daisy Chain verkabelt und nicht sternförmig. Darüber hinaus sind die Flugzeugkabinenmodule 1 jederzeit im laufenden Betrieb ein- oder aussteckbar, ohne die Datenübertragung außerhalb der jeweiligen Flugzeugkabinenmodulkette zu beeinträchtigen.

Darüber hinaus ist es möglich, die Sicherheit und Zuverlässigkeit der Spannungsversorgung für die Flugzeugkabinenmodule 1 zu erhöhen, indem man eine zusätzliche Backup-Versorgungsspannung, beispielsweise eine Notfallspannung über die Datenleitungen einspeist. Das Vorsehen einer gemeinsamen Daten- und Energieversorgung erleichtert zudem die einfache Installation von Flugzeugkabinenmodulen 1 erheblich. Bei dem erfindungsgemäßen System wird die Versorgungsspannung mittels einer Schleife den verketteten Flugzeugkabinenmodulen 1 zugeführt. Hierdurch wird die Anzahl der zu verlegenden Kabel 3 erheblich reduziert, so dass das Gesamtgewicht des Flugzeugs und somit die laufenden Betriebskosten abnehmen. Durch die Verringerung der Anzahl der notwendigen Leitungen ist es zudem möglich, Kabel 3 mit einem geringeren Durchmesser zu verwenden, so dass die Montage platzsparend erfolgen kann.

## Patentansprüche

1. Flugzeugkabinenmodul (1) mit:
(a) einem Anschlussstecker (2) zum Anschluss eines Kabels (3), das mindestens eine elektrische Datenleitung und einen Mantel zur elektromagnetischen Abschirmung aufweist, **gekennzeichnet durch**
(b) eine Trennschaltung (5), die ein Datensignal von einer Versorgungsgleichspannung trennt, wobei die Versorgungsgleichspannung und das der Versorgungsgleichspannung additiv überlagerte Datensignal über die elektrische Datenleitung des Kabels (3) empfangen werden, und wobei die Versorgungsgleichspannung zwischen verschiedenen Spannungspegeln umschaltbar ist.

2. Flugzeugkabinenmodul nach Anspruch 1, mit einer Schnittstelle über die die Amplitude der über die Datenleitung übertragene Versorgungsgleichspannung konfigurierbar ist.

3. Flugzeugkabinenmodul (1) nach Anspruch 1,
wobei das Kabel (3) mindestens eine elektrische Datenhinleitung und mindestens eine elektrische Datenrückleitung aufweist.

4. Flugzeugkabinenmodul (1) nach Anspruch 1-3,
wobei das Flugzeugkabinenmodul (1) eine Passagierversorgungseinheit (PSU) oder eine Kabinenbeleuchtungseinheit (IBU) ist.

5. Flugzeugkabinenmodul (1) nach Anspruch 1-4
wobei das Flugzeugkabinenmodul (1) über das Kabel (3) mit weiteren Flugzeugkabinenmodulen seriell zu einer Flugzeugkabinenmodulkette verkettbar ist.

6. Flugzeugkabinenmodul (1) nach Anspruch 5,
wobei eine Flugzeugkabinenmodulkette an eine Decodier-/Codier-Einheit (6) anschließbar ist.

7. Flugzeugkabinenmodul (1) nach Anspruch 6,
wobei die Decodier-/Codier-Einheit (6) mit einem Flugzeugkabinenserver (8) verbunden ist.

8. Flügzeugkabinenmodul (1) nach Anspruch 7,
wobei die Versorgungsspannung an der Decodier-/Codier-Einheit (6) eingespeist wird.

9. Flugzeugkabinenmodul (1) nach Anspruch 1-8,
wobei die Spannungspegel der Versorgungsgleichspannung einen Normal-Gleichspannungspegel,
einen Notfall-Gleichspannungspegel und
einen Hoch-Gleichspannungspegel aufweisen.

10. Flugzeugkabinenmodul (1) nach Anspruch 1-9,
wobei das Kabel (3) in einem Versorgungskanal eines Flugzeugs verlegt ist.

11. Flugzeugkabinenmodul (1) nach Anspruch 1-10,
wobei die Trennschaltung (5) zwei Trenntrafos (10A, 10B) aufweist, die jeweils eine Drossel (11A, 11B) zur Signalentstörung mit den Anschlussstecker (2) verbunden sind.

12. Flugzeugkabinenmodul (1) nach Anspruch 11,
wobei die Trenntrafos (10A, 10B) jeweils eine Primärspule, die über eine Drossel (11A, 11B) mit dem Anschluss-Stecker (2) verbunden ist, und jeweils eine Sekundärspule aufweisen, die mit einer Datenverarbeitungseinheit zur Verarbeitung des übertragenen Datensignals verbunden ist.

13. Flugzeugkabinenmodul (1) nach Anspruch 12,
wobei an einer Mittenanzapfung der Primärspulen der Trenntrafos (10A, 10B) die übertragene Versorgungsspannung zur Spannungsversorgung des Flugzeugkabinenmoduls(1) auskoppelbar ist.

14. Flugzeugkabinenmodul (1) nach Anspruch 13,
wobei die beiden Mittenanzapfungen der Primärspulen der Trenntrafos (10A, 10B) mit einer Brückengleichrichterschaltung verbunden ist.

15. Flugzeugkabinenmodul (1) nach Anspruch 9,
wobei der Normal-Gleichspannungspegel 28 V oder 42 V beträgt.

16. Flugzeugkabinenmodul (1) nach Anspruch 1-15,
wobei das Flugzeugkabinenmodul (1) im laufenden Betrieb mittels des Anschluss-Steckers (2) ein- oder aussteckbar ist.

17. Netzwerk mit mehreren Flugzeugkabinenmodulen (1) nach Anspruch 1 bis 16, die über das Kabel (3) seriell miteinander verkabelt sind.

18. Verfahren zur Spannungsversorgung von mindestens einen Flugzeugkabinenmodul (1) mit den Schritten:
- Empfangen eines einer Versorgungsgleichspannung additiv überlagerten Datensignals über eine elektrische Datenleitung eines abgestimmten Kabels (3) durch das Flugzeugkabinenmodul (1),
- Trennen der Versorgungsgleichspannung von dem überlagerten Dachsignal; und
- Umschalten der Versorgungsgleichspannung zwischen verschiedenen Spannungspegeln.

19. Verfahren nach Anspruch 18, wobei die Amplitude der über die Datenleitung übertragene Versorgungsgleichspannung über eine Schnittstelle des Flugzeugkabinenmoduls (1) konfiguriert wird.

## Claims

1. An aircraft cabin module (1) having:
a connector plug (2) for connecting a cable (3) comprising at least one electrical data line and one sheath for electromagnetic shielding, **characterised by**
an isolating circuit (5), which isolates a data signal from a direct current supply voltage, the direct current supply voltage and the data signal additively superimposed on the direct current supply voltage being received via the electrical data line of the cable (3), and the direct current supply voltage being capable of being switched over between different voltage levels.

2. An aircraft cabin module according to claim 1, having an interface via which the amplitude of the direct current supply voltage transmitted via the data line may be configured.

3. An aircraft cabin module (1) according to claim 1, wherein the cable (3) comprises at least one electrical outgoing data line and at least one electrical return data line.

4. An aircraft cabin module (1) according to claims 1-3, wherein the aircraft cabin module (1) is a passenger supply unit (PSU) or an illumination ballast unit (IBU).

5. An aircraft cabin module (1) according to claims 1-4, wherein the aircraft cabin module (1) may be interlinked serially with further aircraft cabin modules via the cable (3) to yield an aircraft cabin module chain.

6. An aircraft cabin module (1) according to claim 5, wherein an aircraft cabin module chain may be connected to a decoder/encoder unit (6).

7. An aircraft cabin module (1) according to claim 6, wherein the decoder/encoder unit (6) is connected to an aircraft cabin management server (8).

8. An aircraft cabin module (1) according to claim 7, wherein the supply voltage is fed in at the decoder/encoder unit (6).

9. An aircraft cabin module (1) according to claims 1-8, wherein the voltage levels of the direct current supply voltage comprise a normal direct current voltage level, an emergency direct current voltage level and a high direct current voltage level.

10. An aircraft cabin module (1) according to claims 1-9, wherein the cable (3) is laid in an aircraft service duct.

11. An aircraft cabin module (1) according to claims 1-10, wherein the isolating circuit (5) comprises two isolating transformers (10A, 10B), which are in each case connected via a choke (11A, 11B) for signal interference suppression to the connector plug (2).

12. An aircraft cabin module (1) according to claim 11, wherein the isolating transformers (10A, 10B) each comprise a primary coil, which is connected via a choke (11A, 11B) to the connector plug (2), and each comprise a secondary coil, which is connected to a data processing unit for processing the transmitted data signal.

13. An aircraft cabin module (1) according to claim 12, wherein the transmitted supply voltage may be outcoupled at a central tap of the primary coils of the isolating transformers (10A, 10B) to supply voltage to the aircraft cabin module (1).

14. An aircraft cabin module (1) according to claim 13, wherein the two central taps of the primary coils of the isolating transformers (10A, 10B) are connected to a bridge rectifier circuit.

15. An aircraft cabin module (1) according to claim 9, wherein the normal direct current voltage level amounts to 28 V or 42 V.

16. An aircraft cabin module (1) according to claims 1-15, wherein the aircraft cabin module (1) may be plugged in or unplugged during ongoing operation by means of the connector plug (2) .

17. A network with a plurality of aircraft cabin modules (1) according to claims 1 to 16, which are connected serially together via the cable (3).

18. A method of supplying voltage to at least one aircraft cabin module (1), comprising the following steps:
- reception of a data signal superimposed additively on a direct current supply voltage via an electrical data line of an adapted cable (3) by the aircraft cabin module (1),
- isolation of the direct current supply voltage from the superimposed data signal; and
- switching of the direct current supply voltage between different voltage levels.

19. A method according to claim 18, wherein the amplitude of the direct current supply voltage transmitted via the data line is configured via an interface of the aircraft cabin module (1).

## Revendications

1. Module de cabine d'avion (1) comprenant :
un connecteur (2) pour le raccordement d'un câble (3), qui présente au moins une ligne de transmission de données électrique et une gaine de blindage électromagnétique, **caractérisé par** un circuit d'isolement (5), 1 qui isole un signal de données d'une tension continue d'alimentation, la tension continue d'alimentation et le signal de données superposé additivement à la tension continue d'alimentation étant reçus via la ligne de transmission de données électrique du câble (3), et la tension continue d'alimentation pouvant être commutée entre différents niveaux de tension.

2. Module de cabine d'avion selon la revendication 1, comprenant une interface par laquelle l'amplitude de la tension continue d'alimentation transmise via la ligne de transmission de données peut être configurée.

3. Module de cabine d'avion (1) selon la revendication 1, dans lequel le câble (3) présente au moins une ligne d'entrée de données électrique et au moins une ligne de sortie de données électrique.

4. Module de cabine d'avion (1) selon la revendication 1-3, dans lequel le module de cabine d'avion (1) est un bloc service passagers (PSU) ou une unité d'éclairage de cabine (IBU).

5. Module de cabine d'avion (1) selon la revendication 1-4, dans lequel le module de cabine d'avion (1) peut, via le câble (3), être relié en série à d'autres modules de cabines d'avion pour former une chaîne de modules de cabine d'avion.

6. Module de cabine d'avion (1) selon la revendication 5, dans lequel une chaîne de modules de cabine d'avion peut être raccordée à une unité de décodage/codage (6).

7. Module de cabine d'avion (1) selon la revendication 6, dans lequel l'unité de décodage/codage (6) est reliée à un serveur de cabine d'avion (8).

8. Module de cabine d'avion (1) selon la revendication 7, dans lequel la tension d'alimentation est appliquée à l'unité de décodage/codage (6).

9. Module de cabine d'avion (1) selon la revendication 1-8, dans lequel les niveaux de tension de la tension continue d'alimentation présentent un niveau de tension continue normal, un niveau de tension continue d'urgence et un niveau de tension continue élevé.

10. Module de cabine d'avion (1) selon la revendication 1-9, dans lequel le câble (3) est posé dans un canal d'alimentation d'un avion.

11. Module de cabine d'avion (1) selon la revendication 1-10, dans lequel le circuit d'isolement (5) présente deux transformateurs d'isolement (10A, 10B), qui sont chacun reliés au connecteur (2) via une bobine de self (11A, 11B) pour le déparasitage des signaux.

12. Module de cabine d'avion (1) selon la revendication 11, dans lequel les transformateurs d'isolement (10A, 10B) présentent chacun une bobine primaire, qui est reliée au connecteur (2) via une bobine de self (11A, 11B), et chacun une bobine secondaire, qui est reliée à une unité de traitement de données permettant de traiter le signal de données transmis.

13. Module de cabine d'avion (1) selon la revendication 12, dans lequel la tension d'alimentation transmise pour l'alimentation électrique du module de cabine d'avion (1) peut être découplée à la prise médiane des bobines primaires des transformateurs d'isolement (10A, 10B).

14. Module de cabine d'avion (1) selon la revendication 13, dans lequel les deux prises médianes des bobines primaires des transformateurs d'isolement (10A, 10B) sont reliées à un circuit redresseur en pont.

15. Module de cabine d'avion (1) selon la revendication 9, dans lequel le niveau de tension continue normal est de 28 V ou 42 V.

16. Module de cabine d'avion (1) selon la revendication 1-15, dans lequel le module de cabine d'avion (1) en service peut être connecté ou déconnecté à l'aide du connecteur (2).

17. Réseau présentant plusieurs modules de cabine d'avion (1) selon les revendications 1 à 16, qui sont câblés ensemble en série via le câble (3).

18. Procédé d'alimentation électrique d'au moins un module de cabine d'avion (1) comprenant les étapes suivantes :
- réception d'un signal de données superposé additivement à une tension continue d'alimentation via une ligne de transmission de données électrique du câble adapté (3) par le module de cabine d'avion (1),
- isolement de la tension continue d'alimentation du signal de données superposé ; et
- commutation de la tension continue d'alimentation entre différents niveaux de tension.

19. Procédé selon la revendication 18, dans lequel l'amplitude de la tension continue d'alimentation transmise via la ligne de transmission de données est configurée par une interface du module de cabine d'avion (1).
